Europäisches Patentamt

European Patent Office

Office européen des brevets

(19)

(11) Veröffentlichungsnummer : **0 082 300 B2**

# (12) NEUE EUROPÄISCHE PATENTSCHRIFT

(45) Veröffentlichungstag der neuen Patentschrift :
23.12.92 Patentblatt 92/52

(51) Int. Cl.$^5$ : **B60R 16/02**

(21) Anmeldenummer : **82110493.2**

(22) Anmeldetag : **13.11.82**

(54) **Multiplex-Verkabelungssystem für Fahrzeuge.**

(30) Priorität : **11.12.81 DE 3149142**

(43) Veröffentlichungstag der Anmeldung :
**29.06.83 Patentblatt 83/26**

(45) Bekanntmachung des Hinweises auf die
Patenterteilung :
**03.06.87 Patentblatt 87/23**

(45) Bekanntmachung des Hinweises auf die
Entscheidung über den Einspruch :
**23.12.92 Patentblatt 92/52**

(84) Benannte Vertragsstaaten :
**AT CH DE FR GB IT LI NL SE**

(56) Entgegenhaltungen :
**EP-A- 0 031 400**
**EP-A- 0 041 193**
**EP-A- 0 044 218**
**DE-A- 1 900 872**
**DE-A- 2 433 025**
**DE-A- 2 724 759**
**DE-A- 2 942 987**
**US-A- 3 651 454**
**US-A- 3 864 578**
**Prof. Dr. Ing. Weber, Fernwirktechnik, VDI-**
**Verlag GmbH, Düsseldorf 1975**

(56) Entgegenhaltungen :
**Prof. Dr. Ing. Weber, Multiplexed wiring in the**
**automobile: a near-term possibility, IMechE**
**Conference publications 1981-10,London**
**"Kraftfahrtechnisches Taschenbuch" der Fir-**
**ma Bosch, 1984, 19. Auflage, Seiten 518, 519**
**und 578**
**"Handbuch der Kraftfahrzeugtechnik", W. He-**
**yne-Verlag, München, 1976, BD. 2, Seite 942**
**DIN-Norm 74000**

(73) Patentinhaber : **WABCO Westinghouse**
**Fahrzeugbremsen GmbH**
**Am Lindener Hafen 21 Postfach 91 12 80**
**W-3000 Hannover 91 (DE)**

(72) Erfinder : **Neuhaus, Detlev**
**Heinkenstrasse 1**
**W-3012 Langenhagen (DE)**
Erfinder : **Hesse, Karl-Heinz**
**Burgfeld 3**
**W-3007 Gehrden (DE)**
Erfinder : **Ruhnau, Gerhard**
**Schneerener Strasse 53**
**W-3057 Neustadt 1 (DE)**
Erfinder : **Liermann, Peter**
**Am Kucksberg 19**
**W-3013 Barsinghausen (DE)**

(74) Vertreter : **Schrödter, Manfred**
**WABCO Westinghouse Fahrzeugbremsen**
**GmbH Am Lindener Hafen 21 Postfach 91 12**
**80**
**W-3000 Hannover 91 (DE)**

EP 0 082 300 B2

## Beschreibung

Die Erfindung bezieht sich auf ein Multiplex-Verkabelungssystem für Fahrzeuge gemäss dem Oberbegriff des Patentanspruchs 1. Ein sokhes System ist aus der DE-A-2 942 987 bekannt.

Durch die ständige Verbesserung der Fahrzeugausstattung zur Erhöhung der Sicherheit und des Fahrkomforts hat sich die Anzahl der elektrischen Verbraucher im Kraftfahrzeug erheblich erhöht.

Mit dieser Entwicklung ging eine erhebliche Zunahme der Fahrzeugverkabelung einher. Neben der gestiegenen Kompliziertheit der Verdrahtung haben die Kabelbäume einen Umfang erreicht, die ihre Verarbeitung eingrenzen und zu Platzproblemen bei der heutigen Kompaktbauweise der Fahrzeuge führen.

Neben dem Platzbedarf erhöht sich zunehmend auch der Kupferbedarf und die Unübersichtlichkeit der Anlage. Der wachsende Umfang der erforderlichen Leitungen fällt besonders deswegen ins Gewicht, weil aus Gründen der mechanischen Festigkeit ein Mindestquerschnitt der einzelnen Leitungen nicht unterschritten werden darf, obwohl teilweise nur Mess- oder Steuerströme im Milliampère-Bereich fliessen.

Um mit weniger Leitungen auszukommen, ist es bereits bekannt, (US-A-3 651 454, DE-A-2 433 025), anstelle separater Leitungen nur noch eine Multiplex-Ringleitung vorzusehen, an die sämtliche Verbraucher mittels Stichleitungen angeschlossen sind. Diese Ringleitung kann z.B im einfachsten Fall aus einer Versorgungs- und einer Signalleitung bestehen. Auf die Signalleitung werden Schaltbefehle mittels eines zentralen Senders in kodierter Form aufgebracht. Über Empfänger, die den Verbrauchern zugeordnet sind, werden die Befehle dekodiert und ausgeführt. Die Ausführung des Befehls sowie weitere Informationen über den fehlerfreien Zustand des Verbrauchers oder auch andere, z.B. analoge Grössen, werden zum Sender zurückgemeldet. Es ist also üblich, dass der "Sender" auch Signale empfängt und die "Empfänger" auch Signale aussenden. Um die Zahl der Empfänger zu verkleinern, werden mehrere Verbraucher an eine gemeinsame Unterverteilung angeschlossen (DE-A-2 433 025).

Wie die Erfahrung gezeigt hat, ist die Ursache von Störungen in der Elektrik eines Kraftfahrzeugs häufig in der Verkabelung und zwar durch Kurzschluss oder Unterbrechung zu finden. Ein solcher Fehler wirkt sich nun in den oben beschriebenen Multiplex-Systemen mit Ringleitung besonders negativ aus. Hierdurch fällt nicht nur ein Verbraucher, sondern alle oder ein grosser Teil aus. Die gleiche Wirkung hat ein Ausfall des zentralen Senders. Die bekannten Multiplex-Systeme können daher insgesamt störanfälliger als die konventionelle Verdrahtung mit Einzelleitern sein.

Bei dem gattungsgemäßen Multiplex-Verkabelungsystem nach der DE-A-2 942 987 ist das Leitungssystem steinförmig ausgebildet.

Die Verwendung eines sternförmigen Leitungssystems bei Multiplex-Verkabelungen ist, scheinbar paradox, da der Hauptvorteil eines Multiplex-Systems, nämlich alle Verbraucher an eine einzige gemeinsame Ringleitung anschliessen zu können, nicht genutzt wird. Hierdurch wird die durch Multiplex maximal mögliche Einsparung an Verdrahtungsaufwand wieder geringfügig erhöht. Es ergibt sich aber der Vorteil einer erhöhten Sicherheit, die besonders bei Fahrzeugen des öffentlichen Dienstes, wie Bussen, Krankenwagen, Feuerwehr, Strassenbahn usw. besonders wichtig ist. Durch die Verwendung eines sternförmigen Leitungssystems wird bei Unterbrechung oder Kurzschluss einer Leitung nur die eine daran angeschlossene Unterverteilung mit den zugehörigen Verbrauchern unwirksam. Alle übrigen Verbraucher können jedoch weiter in Betrieb genommen werden.

Der Erfindung liegt die Aufgabe zugrunde, die Folgen eines möglichen Ausfalles von Teilen des Multiplex-Systems noch weiter abzumildern. Insbesondere soll bei einer Störung der für die Beleuchtung zuständigen Unterverteilungen des Nachts zumindest eine teilweise Erkennbarkeit der Umrisse des Fahrzeugs gesichert sein.

Diese Aufgabe wird durch die im Patentansprüch enthaltene Erfindung gelöst.

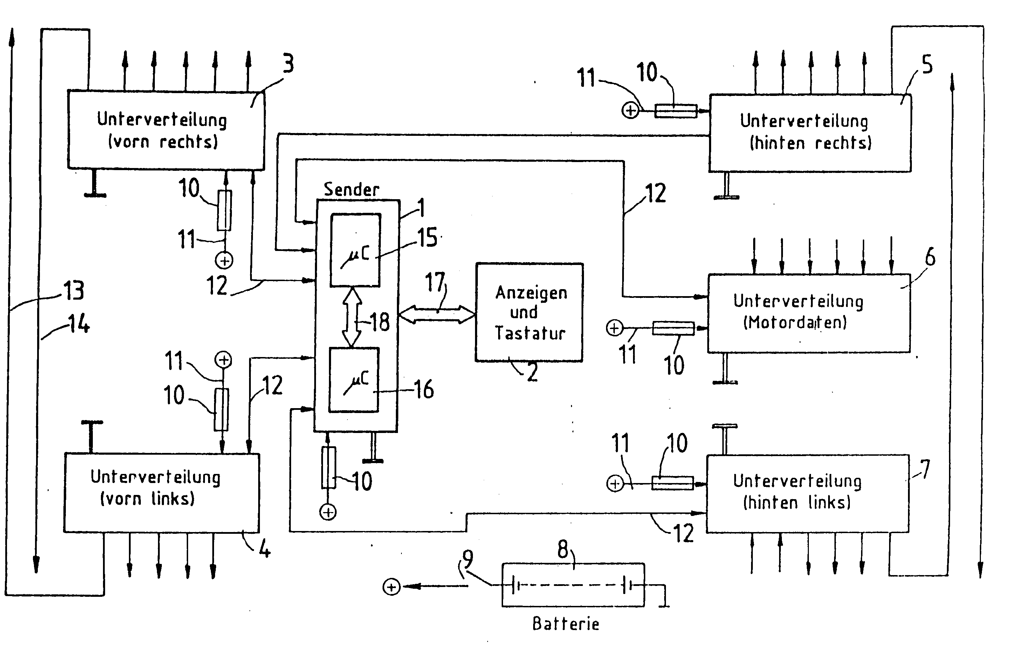

Ein Ausführungsbeispiel des erfindungsgemässen Multiplex-Verkabelungssystems ist in der Zeichnung in vereinfachter Form als Blockschaltbild dargestellt.

Das System besteht im wesentlichen aus einem zentralen Sender 1, der über Verbindungsleitungen 11, 12 sternförmig mit Unterverteilungen 3 bis 7 verbunden ist. Die Verbindungsleitungen sind zweiadrig ausgeführt. Die eine Leitung 11 übernimmt die Stromversorgung der Unterverteilungen. Diese sind über Sicherungen 10 zum Leitungsschutz abgesichert. Die Leitung 11 ist über einen Zündschalter 9 an eine Fahrzeugbatterie 8 angeschlossen.

Die zweite Leitung 12 dient als Signalleitung. Auf dieser werden seriell kodierte Befehlstelegramme zu den einzelnen Unterverteilungen gesendet bzw. Rückmeldetelegramme übertragen.

Die Unterverteilungen 3 bis 7 sind zweckmässig an solchen Stellen im Fahrzeug angeordnet, wo eine Vielzahl von elektrischen Verbrauchern zu finden ist. So kann z.B. die Unterverteilung 3 vorne rechts in einem Bus angeordnet sein und zur Versorgung von Nebelscheinwerfern, Fernlicht rechts, Abblendlicht rechts, Blinklicht rechts usw. dienen (nicht dargestellt). Entsprechend sind auch die übrigen Unterverteilungen an zugehörige Verbraucher angeschlossen. Es besteht auch die Möglichkeit, über die Unterverteilungen die Stellung von externen Gebern oder analoge Fahrzeugdaten zum Sender zurückzumelden.

Diese Möglichkeit ist in den Unterverteilungen 5 und 6 angedeutet. Die Unterverteilung 6 befindet sich im Motorraum und sendet beispielsweise die Werte der Öltemperatur, der Kühlwassertemperatur, der Tankfüllung des Bremsdruckes usw. an den zentralen Sender 1 zurück.

Zur weiteren Erhöhung der Sicherheit werden wichtige Verbraucher, z.B. Begrenzugslampen, auf einer Fahrzeugseite durch eine Unterverteilung für die andere Fahrzeugseite über Querleitungen 13, 14 mitgeschaltet. Hierdurch wird sichergestellt, dass auch bei einem Ausfall beispielsweise der Unterverteilung 3, welche für die rechte Fahrzeugseite zuständig ist, die rechte Begrenzungsleuchte durch die Unterverteilung 4 angesteuert wird. Hierdurch bleiben bei Dunkelheit die Umrisse des Fahrzeugs erkennbar.

Der zentrale Sender 1 ist über einen Bus 17 in bekannter Weise mit einer Bedieneinheit 2 verbunden, auf welcher Anzeigen, Schalter und Tasten vereinigt sind.

Der Sender 1 besteht zur Erhöhung der Sicherheit aus zwei Senderechnern 15, 16, welche durch einen Bus 18 verbunden sind. Die Senderechner 15, 16 sind jeweils diagonal gegenüberliegenden Unterverteilungen 3, 7 und 4, 5, 6 zugeordnet. Die Senderechner 15, 16 sind als Mikrocomputer ausgebildet.

Im Fehlerfall können Funktionen von einem Rechner auf den anderen übertragen werden. Hierdurch wird die Systemsicherheit weiter erhöht.

## Patentansprüche

1. Multiplex-Verkabelungssystem für Fahrzeuge mit einem zentralen Sender (1) und mehreren Unterverteilungen (3 bis 7), die über ein Leitungssystem mit dem Sender verbunden sind, wobei an die Unterverteilungen jeweils mehrere Verbraucher und/oder Geber angeschlossen sind, wobei das Leitungssystem sternförmig ausgebildet ist und aus separaten Verbindungsleitungen (11, 12) zwischen dem Sender (1) und den Unterverteilungen (3 bis 7) besteht, wobei die Versorgungsleitungen (11) durch Sicherungen (10) einzeln abgesichert sind, dadurch gekennzeichnet, daß bestimmte Verbraucher auf einer Fahrzeugseite durch eine Unterverteilung für die andere Fahrzeugseite über Querleitungen (13, 14) mitgeschaltet werden.

## Claims

1. Multiplex wiring system for vehicles having a central transmitter (1) and several secondary distribution units (3 to 7) which are connected via a line system to the transmitter, several receivers and/or senders being connected to each of the secondary distribution units, the line system being star-shaped and comprising separate connecting lines (11, 12) between the transmitter (1) and the secondary distribution units (3 to 7), the supply lines (11) being individually protected by fuses (10), characterised in that certain receivers on one side of the vehicle are also switched through a secondary distribution unit for the other side of the vehicle via cross links (13, 14).

## Revendications

1. Système de câblage multiplex pour véhicules, comprenant un émetteur central (1) et plusieurs dispositifs de distribution secondaire (3-7) qui sont reliés par un système de lignes à l'émetteur, avec raccordement de plusieurs appareils utilisateurs de courant électrique et/ou de capteurs à chacun des dispositifs de distribution secondaire, le système de lignes possédant une disposition en étoile et étant constitué de lignes de connexion séparées (11, 12) entre l'émetteur (1) et les dispositifs de distribution secondaire (3 à 7), les lignes de connexion séparées (11) étant protégées individuellement par des fusibles (10), caractérisé en ce que des utilisateurs déterminés sur un côte du véhicule sont commandés, à travers des lignes transversales (13, 14), par un dispositif de distribution secondaire pour l'autre côté du véhicule.